# FASCICULE DE BREVET EUROPEEN

(11) **EP 0 718 837 B1**
(45) Date de publication et mention de la délivrance du brevet: **28.01.1998**
(21) Numéro de dépôt: 95402640.7
(22) Date de dépôt: 22.11.1995
(51) Int. Cl.: G11B 17/028

(54) **Dispositif de mise en rotation à dispositif de serrage de disque**
Plattenteller mit Plattenklemmvorrichtung
Turning table with disc clamping means

(30) Priorité: 19.12.1994 FR 9415260
(43) Date de publication de la demande: 26.06.1996
(73) Titulaire: FILLONY LIMITED, Wan Chai (HK)
(72) Inventeur: Takahashi, Hiroshi, Taikoo Shing (HK)
(74) Mandataire: Rousset, Jean-Claude

(56) Documents cités:
- DE-A- 3 534 529
- FR-A- 2 460 024
- GB-A- 2 085 634
- US-A- 5 014 143
- US-A- 5 275 424
- US-A- 5 313 351

## Description

L'invention concerne un dispositif pour le positionnement et la mise en rotation d'un disque muni d'un trou central en vue de la lecture et/ou de l'écriture d'informations sur le disque, en particulier dans les lecteurs de disques optiques du type connu sous la désignation "Compact Disc".

Il existe des lecteurs à chargement manuel, dans lesquels l'utilisateur place directement le disque sur un tourne-disque destiné à le mettre en rotation pour la lecture, et des lecteurs à chargement par tiroir, dans lesquels l'utilisateur place le disque sur un support horizontal appartenant à un tiroir qui peut sortir à cet effet du lecteur par un mouvement horizontal, le tourne-disque venant prendre en charge le disque et l'écarter de ce support par un mouvement de pivotement autour d'un axe horizontal, après fermeture du tiroir.

Dans les deux catégories de lecteurs, des moyens comportant un aimant sont prévus pour solidariser le disque au tourne-disque. Par ailleurs, la lecture des informations est assurée par une tête de lecture qui se déplace sensiblement radialement en regard d'une face du disque. La distance entre la tête de lecture et la surface du disque devant être définie avec précision, la tête est montée sur une structure de guidage elle-même solidaire du tourne-disque et qui, dans le cas d'un lecteur à tiroir, accompagne celui-ci dans son pivotement.

Il est théoriquement possible d'utiliser une même tête pour la lecture ininterrompue et alternée de disques placés sur différents tourne-disques, chaque disque placé sur un tourne-disque étant remplacé après sa lecture et pendant la lecture d'un disque placé sur un autre tourne-disque. Cependant, la mise en place manuelle du disque, dans le cas d'un lecteur à chargement manuel, et sa fixation magnétique, pour les deux catégories de lecteurs, engendrent des chocs et des vibrations qui se transmettraient alors à la tête de lecture et perturberaient la lecture en cours. Dans les lecteurs à tiroir, le pivotement de la tête avec le tourne-disque interdit également son fonctionnement pendant le changement de disque.

Par ailleurs le pivotement du tourne-disque, dans le cas d'un lecteur à tiroir, et la fixation magnétique du disque utilisent un moteur distinct de celui utilisé pour la rotation du tourne-disque lors de la lecture, ce qui complique la structure du dispositif et augmente son encombrement et son coût.

FR-A-2 460 024 décrit un dispositif du genre défini en introduction, comprenant un support pour recevoir le disque lors de son introduction dans le dispositif, un tourne-disque associé à un arbre d'entraînement, propre à tourner autour d'un axe à une vitesse correspondant à la vitesse de rotation du disque requise pour la lecture/écriture, le tourne-disque présentant un siège pour recevoir une région d'une première face du disque adjacente audit trou central, et un agencement de transfert propre à déplacer le tourne-disque, lorsque ladite première face du disque repose sur le support, d'une position de repos dans laquelle ledit siège est éloigné de ladite région à une position de travail dans laquelle ledit siège est en contact avec ladite région et maintient le disque écarté du support, et inversement, ainsi qu'à fixer fermement le disque au tourne-disque dans la position de travail et à l'en dégager dans la position de repos.

Dans ce dispositif connu, l'agencement de transfert comprend un premier élément propre à se déplacer axialement par rapport au tourne-disque en correspondance du déplacement axial propre de celui-ci et au moins un second élément coopérant avec le premier élément et avec le tourne-disque pour exécuter sous l'effet du déplacement relatif de ceux-ci, par rapport au tourne-disque, un mouvement comportant une composante radiale de façon à venir s'appuyer sur le disque, au voisinage du trou central, pour l'appliquer fermement sur ledit siège lorsque le tourne-disque se déplace vers sa position de travail.

Ici encore il est fait appel à un second moteur, qui sert au déplacement axial du tourne-disque.

Le but de l'invention est de remédier à tout ou partie des inconvénients ci-dessus.

L'invention vise un dispositif selon les revendications 1 à 8.

L'invention a également pour objet un appareil pour la lecture et/ou l'écriture d'informations sur des disques, comprenant au moins un dispositif tel que défini ci-dessus, et un bloc de lecture et/ou d'écriture monté sur une structure de guidage fixe de façon à se déplacer sensiblement radialement en regard d'une face d'un disque lorsque celui-ci est mis en rotation par ledit dispositif. Ainsi le bloc de lecture/écriture et sa structure de guidage n'accompagnent pas le tourne-disque dans son déplacement axial, ce qui simplifie encore l'appareil et en améliore la fiabilité.

Un tel appareil peut comprendre au moins deux dispositifs de positionnement et de mise en rotation, le bloc de lecture et/ou d'écriture étant monté sur ladite structure, comme connu en soi par US-A-5 313 351, de façon à pouvoir se déplacer en regard d'une face aussi bien d'un disque mis en rotation par l'un desdits dispositifs que d'un disque mis en rotation par l'autre dispositif. Un bloc de lecture/écriture unique est ainsi utilisé pour plusieurs tourne-disques, ce qui apporte une simplification et une économie supplémentaires. De plus, le disque placé sur l'un des tourne-disques peut, après lecture ou écriture, être remplacé par un autre disque, sans perturber la lecture/écriture en cours sur un autre tourne-disque, grâce à l'absence de choc et de vibration, permettant une lecture/écriture pratiquement continue, interrompue seulement pendant le temps de déplacement du bloc d'un disque à un autre.

Les caractéristiques et avantages de l'invention seront exposés plus en détail dans la description ci-après, en se référant aux dessins annexés, sur lesquels :
- la figure 1 est une vue partielle de dessus, partiellement arrachée, d'un lecteur de disque compact équipé d'un dispositif selon l'invention ; et
- les figures 2 et 3 sont des vues partielles en coupe selon la ligne II-II de la figure 1, le tourne-disque étant dans sa position de repos et dans sa position de travail respectivement.

Le lecteur partiellement illustré comprend un châssis muni d'une platine horizontale 1 sur la face inférieure de laquelle est fixé le boîtier d'un moteur 2 d'axe vertical 3, l'arbre de sortie 4 du moteur faisant saillie au-dessus de la platine 1. L'arbre 4 traverse le fond d'une pièce 5 en forme de godet ouvert vers le haut et dont la paroi cylindrique est filetée intérieurement, le fond du godet étant monté sur l'arbre de façon à être solidaire en rotation de celui-ci. Le filetage interne de la pièce 5 coopère avec un filetage externe d'un tourne-disque 6 de forme générale de révolution autour de l'axe 3.

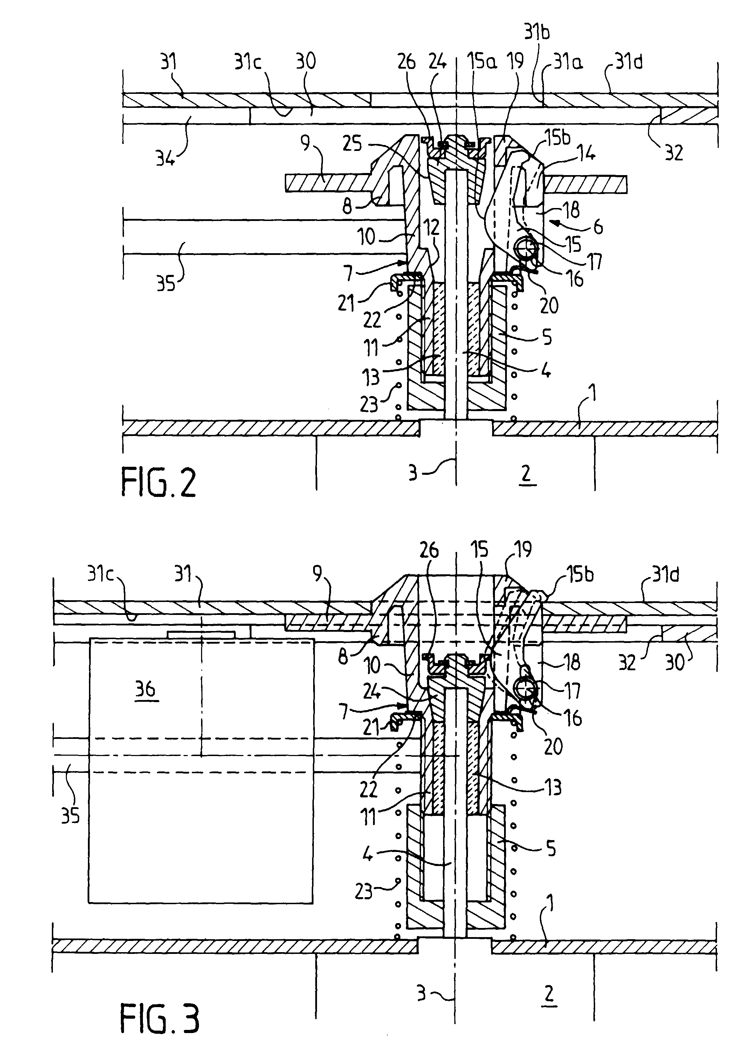

Le tourne-disque 6 comprend un fût tubulaire 7 dont l'extrémité supérieure se raccorde à une jupe annulaire 8 entourant la région supérieure du fût, un plateau horizontal de tourne-disque 9 s'étendant radialement vers l'extérieur à partir de la jupe 8. Le fût 7 est composé d'une partie supérieure 10 de plus grands diamètres intérieur et extérieur, s'étendant vers le bas, à partir de son extrémité supérieure, jusqu'au-delà de l'extrémité inférieure de la jupe 8, et d'une partie inférieure 11 de plus petits diamètres, présentant le filetage externe précité. Les parties 10 et 11 sont mutuellement raccordées extérieurement par un épaulement horizontal 22 et intérieurement par une surface tronconique 12. Une douille 13 en un matériau à faible coefficient de frottement, emmanchée dans la partie 11, est ajustée à frottement doux sur l'arbre 4 de façon à permettre une rotation précise, à faible friction, du tourne-disque autour de l'axe 3. Une fente radiale 14 est ménagée dans la partie supérieure 10 du fût 7 et dans la jupe 8, de façon à loger un bras 15 monté pivotant par rapport au tourne-disque autour d'un axe horizontal 16 orienté de façon tangentielle par rapport au tourne-disque. Le bras 15 est monté à cet effet sur un tourillon 17 dont les deux extrémités sont fixées respectivement sur les deux branches d'une fourche appartenant au tourne-disque, dont l'une 18 est visible sur les figures 2 et 3, ces deux branches s'étendant radialement vers l'extérieur à partir de la partie 10 du fût et vers le bas à partir de la jupe 8, et étant disposées circonférentiellement de part et d'autre de la fente 14. Le bras 15 a une forme sensiblement en boomerang. Il s'étend vers le haut à partir de l'axe 16 et s'oriente d'abord obliquement vers l'axe 3, puis s'incurve dans une région médiane 15a, formant un arrondi convexe en saillie à l'intérieur de la partie 10, pour prendre ensuite une orientation oblique vers l'extérieur. La fente 14 est interrompue au niveau de l'extrémité supérieure du fût 7 pour former un pontet de matière 19 qui sert de butée pour la partie supérieure du bras 15 et limite son mouvement de pivotement en direction de l'axe 3, ce mouvement étant favorisé d'une part par la force de gravité, le centre de gravité du bras étant placé plus haut et plus près de l'axe 3 que l'axe 16, et par un ressort à lame 20 monté sur le fût 7 et agissant sur l'extrémité inférieure du bras.

Une bague 21 entoure la partie inférieure 11 du fût et est appliquée contre l'épaulement 22 par un ressort hélicoïdal 23 qui est comprimé axialement entre cette bague et la platine 1 du châssis. Une pièce de friction 24 fixée à l'extrémité supérieure de l'arbre 4 présente une surface tronconique externe 25 conjuguée de la surface tronconique interne 12 du fût 7. Une rondelle 26 est montée prisonnière mais libre en rotation sur la pièce 24.

Le lecteur comprend en outre, de façon connue, un plateau récepteur 30 sur lequel on peut poser manuellement un disque 31 à lire, le disque 31 étant positionné, par exemple grâce à des moyens de centrage prévus sur le plateau 30, de façon que son axe coïncide avec l'axe 3. Le plateau 30 appartient par exemple à un tiroir qui peut sortir du boîtier du lecteur par un mouvement de translation axial pour le dépôt ou le retrait manuel du disque, et rentrer dans le boîtier, muni du disque, pour venir occuper la position illustrée. Le plateau 30 présente une ouverture centrale 32 dont le diamètre est plus grand que celui du plateau 9 du tourne-disque et qui est relié à un bord libre 33 du plateau 30 par une encoche radiale 34 à bords parallèles. Deux rails 35 fixés au châssis, orientés horizontalement et parallèlement aux bords de l'encoche 34, servent de supports et de guides à un bloc optique 36 assurant la lecture proprement dite du disque. Le bloc 36 peut ainsi se déplacer horizontalement de façon que la source du rayon lumineux incident et le capteur du rayon réfléchi par le disque soient en regard de la face inférieure du disque et parcourent un rayon de celle-ci. Ce mouvement est obtenu au moyen d'une crémaillère 37 solidaire du bloc 36, coopérant avec une roue dentée 38 entraînée en rotation.

Le dispositif selon l'invention fonctionne de la façon suivante.

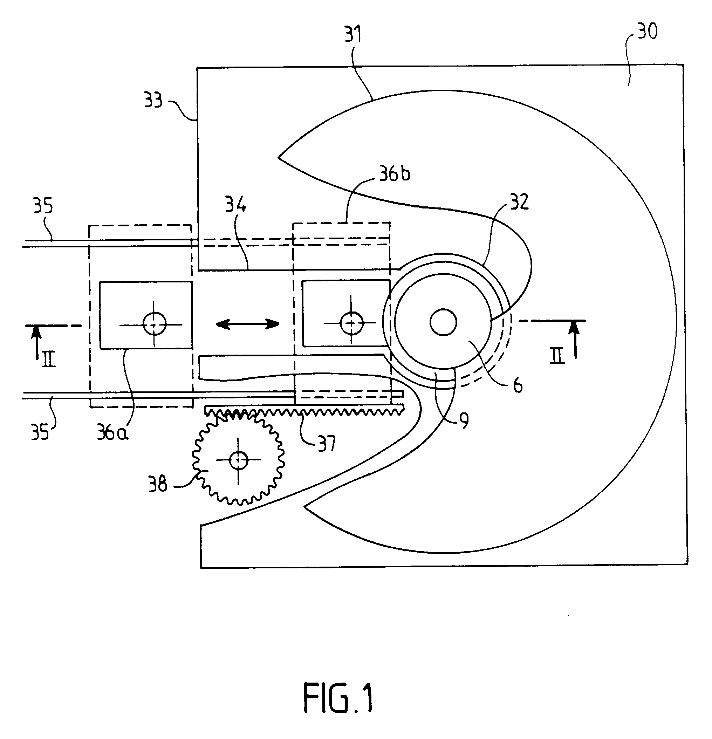

Au moment de la mise en place du disque 31 sur le plateau 30, le tourne-disque est dans la position de repos abaissée montrée à la figure 2, la partie 11 du fût étant vissée dans la pièce 5, approximativement jusqu'au fond de celle-ci. La jupe 8 et le plateau 9 du tourne-disque sont déjà plus haut que les rails 35, mais le tourne-disque est entièrement au-dessous du plateau 30 pour ne pas gêner le déplacement de celui-ci lors de l'ouverture et de la fermeture du tiroir. Le bloc 36 est éloigné de l'axe 3, comme montré en 36a à la figure 1. La pièce de friction 24 et la bague 26 se trouvent à l'intérieur de la partie supérieure 10 du fût 7 et au-dessus de la région médiane 15a du bras 15.

Le moteur 2 est mis en marche de façon à faire tourner l'arbre 4 dans le sens et à la vitesse correspondant au sens et à la vitesse de rotation du disque requis pour la lecture. Ce sens de rotation correspond également au dévissage de la pièce 5 lorsque le tourne-disque est immobile en rotation. La force de frottement entre la bague 21 et l'épaulement 22, appliqués l'un contre l'autre par le ressort 23, est plus grande que les forces de frottement entre la pièce 5 et la partie 11 et entre l'arbre 4 et la douille 13. Le tourne-disque reste donc immobile en rotation et se soulève en se dévissant par rapport à la pièce 5. Le plateau 9 du tourne-disque traverse alors l'ouverture centrale 32 du plateau-support 30 pour venir en contact avec la face inférieure 31c du disque 31 et soulever celui-ci par rapport au plateau 30, la jupe 8 s'ajustant dans le trou 31b. En même temps, l'extrémité libre du bras 15, qui est toujours en butée sur le pontet 19, traverse l'ouverture centrale du disque 31. La fin de course du tourne-disque est définie par la venue en appui mutuel des surface tronconiques 12 et 25 du fût 7 et de la pièce 24, comme montré à la figure 3, les filetages du fût et de la pièce 5 restant en prise sur une petite partie de leur longueur. Immédiatement avant cette fin de course, le bord libre de la rondelle 26 vient en contact avec la région dorsale incurvée 15a du bras 15, repoussant celui-ci vers l'extérieur et l'amenant ainsi en appui sur l'arête supérieure 31a du trou central 31b du disque. Une saillie 15b tournée radialement vers l'extérieur, présentée par le bras 15 à son extrémité libre, s'appuie sur la face supérieure du disque. Le disque est ainsi appuyé fermement sur le plateau 9 du tourne-disque et rendu solidaire de ce dernier. Les surfaces tronconiques 12 et 25 exercent une fonction d'embrayage et permettent une mise en rotation progressive du tourne-disque, celle-ci se produisant, de même que la fixation du disque par le bras 15, sans choc ni vibration. La lecture peut alors commencer au moyen du bloc optique 36, qui est représenté en position de lecture à la figure 3, et à la figure 1 sous la référence 36b.

Lorsque la lecture est terminée, on fait tourner le moteur 2 en sens inverse du sens de lecture. Le tourne-disque étant de nouveau immobilisé en rotation par frottement sur la bague 21, il se visse dans la pièce 5. Les mouvements inverses de ceux décrits précédemment se produisent alors, la rondelle 26 libérant le bras 15 qui libère à son tour le disque 31 et passe au travers du trou 31b pour revenir au-dessous du disque, puis celui-ci étant reposé sur le plateau 30. La rotation du moteur en sens inverse se poursuit jusqu'à ce que le tourne-disque ait repris sa position de repos illustrée à la figure 2. Le tiroir peut alors être extrait pour retirer le disque du plateau 30.

Bien entendu, le tourne-disque peut comporter plusieurs bras pivotants 15, par exemple deux, trois ou quatre, répartis uniformément autour de l'axe 3.

Comme indiqué plus haut, l'absence de choc et de vibration lors de la mise en rotation du tourne-disque et de la fixation du disque sur celui-ci permet d'utiliser deux dispositifs selon l'invention ou plus dans un lecteur multiple utilisant un même bloc optique pour la lecture, le positionnement d'un disque sur un tourne-disque pouvant avoir lieu pendant la lecture d'un autre disque. Par exemple, un second dispositif de positionnement peut être prévu, à gauche du dispositif décrit comme vu sur les figures, le bloc optique 36 pouvant se déplacer linéairement entre l'axe 3 et l'axe du second dispositif de façon à balayer sur une partie de sa trajectoire un rayon d'un disque placé sur le tourne-disque du premier dispositif et, sur une autre partie de sa trajectoire, un rayon, colinéaire avec le premier, d'un disque placé sur le tourne-disque du second dispositif.

## Revendications

1. Dispositif pour le positionnement et la mise en rotation d'un disque (31) muni d'un trou central (31b) en vue de la lecture et/ou de l'écriture d'informations sur le disque, comprenant un support (30) pour recevoir le disque lors de son introduction dans le dispositif, un tourne-disque (6) associé à un arbre d'entraînement (4), propre à tourner autour d'un axe (3) à une vitesse correspondant à la vitesse de rotation du disque requise pour la lecture/écriture, le tourne-disque présentant un siège (9) pour recevoir une région d'une première face (31c) du disque adjacente audit trou central, et un agencement de transfert propre à déplacer le tourne-disque, lorsque ladite première face du disque repose sur le support, d'une position de repos dans laquelle ledit siège est éloigné de ladite région à une position de travail dans laquelle ledit siège est en contact avec ladite région et maintient le disque écarté du support, et inversement, ainsi qu'à fixer fermement le disque au tourne-disque dans la position de travail et à l'en dégager dans la position de repos, dispositif dans lequel l'agencement de transfert déplace le tourne-disque dans la direction axiale de celui-ci et comprend un premier élément (4, 24, 26) propre à se déplacer axialement par rapport au tourne-disque en correspondance du déplacement axial propre de ce dernier et au moins un second élément (15) coopérant avec le premier élément et avec le tourne-disque pour exécuter sous l'effet du déplacement relatif de ceux-ci, par rapport au tourne-disque, un mouvement comportant une composante radiale de façon à venir s'appuyer sur le disque, au voisinage du trou central, pour l'appliquer fermement sur ledit siège lorsque le tourne-disque se déplace vers sa position de travail, caractérisé en ce que le déplacement relatif du tourne-disque et du premier élément est engendré par la rotation de l'arbre d'entraînement, et en ce que le premier élément comprend l'arbre d'entraînement (4) et un organe d'embrayage (24) solidaire dudit arbre et propre à coopérer avec le tourne-disque pour transmettre progressivement à celui-ci, lorsqu'il arrive à sa position de travail, le mouvement de rotation de l'arbre.

2. Dispositif selon la revendication 1, caractérisé en ce que le second élément traverse le trou central lors du déplacement axial du tourne-disque et s'écarte ensuite de l'axe pour faire saillie en regard de la seconde face (31d) du disque dans la position de travail.

3. Dispositif selon l'une des revendications 1 et 2, caractérisé en ce que le second élément est monté pivotant sur le tourne-disque autour d'un axe (16) perpendiculaire à l'axe (3) du tourne-disque.

4. Dispositif selon l'une des revendications précédentes, caractérisé en ce que le premier élément est fixe dans la direction axiale.

5. Dispositif selon l'une des revendications précédentes, caractérisé en ce que le tourne-disque est immobilisé en rotation par friction avec un organe fixe (21, 23) lorsqu'il est éloigné de sa position de travail, le couple de friction avec l'organe d'embrayage devenant supérieur à celui avec l'organe fixe à l'approche de la position de travail.

6. Dispositif selon l'une des revendications précédentes, caractérisé en ce que le premier élément comprend en outre un organe de transformation de mouvement (5) également solidaire de l'arbre, l'organe de transformation de mouvement et le tourne-disque présentant des surfaces de coopération mutuelle pour transformer le mouvement de rotation de l'organe de transformation de mouvement en un mouvement de translation axiale du tourne-disque.

7. Dispositif selon la revendication 6, caractérisé en ce que les surfaces de coopération mutuelle appartiennent à un filetage femelle de l'organe de transformation de mouvement et à un filetage mâle du tourne-disque.

8. Dispositif selon l'une des revendications précédentes, caractérisé en ce que le premier élément comprend en outre un organe de butée (26), libre en rotation par rapport à l'arbre, pour sa coopération avec le second élément (15).

9. Appareil pour la lecture et/ou l'écriture d'informations sur des disques, comprenant au moins un dispositif selon l'une des revendications précédentes, et un bloc de lecture et/ou d'écriture (36) monté sur une structure de guidage fixe (35) de façon à se déplacer sensiblement radialement en regard d'une face (31c) d'un disque lorsque celui-ci est mis en rotation par ledit dispositif.

10. Appareil selon la revendication 9 comprenant au moins deux dispositifs selon l'une des revendications 1 à 8, le bloc de lecture et/ou d'écriture étant monté sur ladite structure de façon à pouvoir se déplacer en regard d'une face aussi bien d'un disque mis en rotation par l'un desdits dispositifs que d'un disque mis en rotation par l'autre dispositif.

## Patentansprüche

1. Vorrichtung zum Positionieren und zum in Drehung versetzen einer Platte (31) mit einem zentralen Loch (31b) beim Lesen und/oder Schreiben von Informationen auf die Platte, aufweisend einen Träger (30) zum Aufnehmen der Platte bei ihrer Einführung in die Vorrichtung, eine Drehantriebsplatte (6), der eine Antriebswelle (4) zugeordnet ist, die sich mit einer Geschwindigkeit entsprechend der Drehzahl der zum Lesen/Schreiben aufgenommenen Platte um eine Achse (3) dreht, wobei die Drehantriebsplatte einen Sitz (9) zum Aufnehmen eines Bereichs einer ersten Seite (31c) der Platte benachbart zu dem zentralen Loch aufweist und eine Übertragungsanordnung zum Verschieben der Drehantriebsplatte sobald die erste Seite der Platte auf dem Träger ruht aus einer Ruheposition, in welcher der Sitz von besagtem Bereich beabstandet ist in eine Arbeitsposition, in welcher der Sitz sich im Kontakt mit besagtem Bereich befindet und die Platte vom Träger beabstandet hält, sowie in entgegengesetzter Richtung, um dadurch die Platte an der Drehantriebsplatte in der Arbeitsposition dauerhaft zu fixieren und sie in der Ruhestellung auszurücken, wobei bei der Vorrichtung die Überführungsanordnung die Drehantriebsplatte in ihrer axialen Richtung verschiebt und ein erstes Element (4, 24, 26) aufweist, das axial in bezug auf die Drehantriebsplatte in Übereinstimmung mit der axialen Verschiebung letzterer axial verschiebbar ist, und zumindest ein zweites Element (15), das mit dem ersten Element und mit der Drehantriebsplatte zusammenwirkt, um unter Einwirkung der Relativverschiebung von diesen in bezug auf die drehantriebsplatte eine Bewegung auszuführen, welche eine radiale Komponente derart aufweist, daß es zur Anlage an der Platte in der Nähe des zentralen Lochs gelangt, um sie auf dem Sitz dauerhaft anzulegen, wenn die Drehantriebsplatte sich in Richtung auf ihre Arbeitsposition verschiebt, dadurch gekennzeichnet, daß die Relativverschiebung der Drehantriebsplatte und des ersten Elements durch die Drehung der Antriebswelle erzeugt ist, und daß das erste Element die Antriebswelle (4) und ein Verstellorgan (24) aufweist, das mit der Welle fest verbunden ist und mit der Drehantriebsplatte zusammenwirken kann, um die Bewegung der Welle auf diese zu allmählich zu übertragen, wenn sie ihre Arbeitsposition erreicht.

2. Vorrichtung nach Anspruch 1, dadurch gekennzeichnet, daß das zweite Element das zentrale Loch bei der axialen Verschiebung der Drehantriebsplatte quert und sich daraufhin von der Achse entfernt, um im Hinblick auf die zweite Seite (31d) der Platte in der Arbeitsposition vorzustehen.

3. Vorrichtung nach Anspruch 1 oder 2, dadurch gekennzeichnet, daß das zweite Element schwenkbar auf der Drehantriebsplatte um die Achse (16) senkrecht zu der Achse (3) der Drehantriebsplatte angebracht ist.

4. Vorrichtung nach einem der vorangehenden Ansprüche, dadurch gekennzeichnet, daß das erste Element in der axialen Richtung fixiert ist.

5. Vorrichtung nach einem der vorangehenden Ansprüche, dadurch gekennzeichnet, daß die Drehantriebsplatte durch Reibung mit einem feststehenden Organ (21, 23) drehmäßig festgesetzt ist, wenn sie von ihrer Arbeitsposition entfernt ist, wobei das Reibungsmoment mit dem Feststellorgan größer wird als dasjenige mit dem feststehenden Organ bei Annäherung aus der Arbeitsposition.

6. Vorrichtung nach einem der vorangehenden Ansprüche, dadurch gekennzeichnet, daß das erste Element außerdem ein Bewegungswandlungsorgan (5) aufweist, das ebenfalls mit der Welle fest verbunden ist, wobei das Bewegungswandlungsorgan und die Drehantriebsplatte Oberflächen zum gegenseitigen Zusammenwirken aufweisen, um die Drehbewegung des Bewegungswandlungsorgans in eine axiale Translation der Drehantriebsplatte zu wandeln.

7. Vorrichtung nach Anspruch 6, dadurch gekennzeichnet, daß die Oberflächen zum gegenseitigen Zusammenwirken aus einem Innengewinde des Bewegungswandlungsorgans und einem Außengewinde der Drehantriebsplatte bestehen.

8. Vorrichtung nach einem der vorangehenden Ansprüche, dadurch gekennzeichnet, daß das erste Element außerdem ein Anschlagorgan (26) aufweist, das in bezug auf die Welle sich frei zum Zusammenwirken mit dem zweiten Element (15) dreht.

9. Vorrichtung zum Lesen und/oder Schreiben von Informationen auf Platten, aufweisend zumindest eine Vorrichtung nach einem der vorangehenden Ansprüche und einen Lese- und/oder Schreibblock (36), der auf einer lagefesten Führungsstruktur (35) derart angebracht ist, daß er sich im wesentlichen radial in bezug auf eine Seite (31c) der Platte verschiebt, wenn diese durch die Vorrichtung in Drehung versetzt ist.

10. Vorrichtung nach Anspruch 9, aufweisend zumindest zwei Vorrichtungen gemäß einem der Ansprüche 1 bis 8, wobei der Lese- und/oder Schreibblock auf der Struktur derart angebracht sind, daß sie sich in bezug auf eine Seite verschieben können, wobei eine Platte durch die eine der Vorrichtungen und eine Platte durch die andere Vorrichtung in Drehung versetzt sind.

## Claims

1. Device for positioning and rotation of a disc (31) fitted with a central hole (31b) with a view to reading and/or writing data on the disc, comprising a support (30) to hold the disc during its introduction into the device, a disc drive (6) associated with a drive shaft (4) able to revolve about an axis (3) at a speed corresponding to the disc rotation speed requiring for reading/writing, the disc drive having a seat (9) to hold an area of a first face (31c) of the disc adjacent to the said central hole, and a transfer device able to move the disc drive when the said first face of the disc rests on the support, from a rest position in which the said seat is at a distance from the said area to a working position in which the said seat is in contact with the said area and holds the disc away from the support, and vice versa, and to hold the disc firmly on the disc drive in the working position and remove it from there in the rest position, device in which the transfer arrangement moves the disc drive in its axial direction and comprises a first element (4, 24, 26) able to move axially in relation to the disc drive corresponding to the own axial displacement of the latter and at least one second element (15) co-operating with the first element and with the disc drive to carry out, under the effect of their relative displacement, in relation to the disc drive, a movement comprising a radial component so as to come to rest on the disc close to the central hole to hold the disc firmly on the said seat when the disc drive moves towards its working position, characterised in that the relative displacement of the disc drive and the first element is caused by the rotation of the drive shaft, and in that the first element comprises the drive shaft (4) and a clutch device (24) of one piece with the said shaft and able to co-operate with the disc drive to transmit the rotation movement of the shaft progressively to this when it reaches its working position.

2. Device according to claim 1, characterised in that the second element passes through the central hole during the axial displacement of the disc drive and then moves away from the axis to project in relation to the second face (31d) of the disc in the working position.

3. Device according to any of claims 1 and 2, characterised in that the second element is mounted pivoting on the disc drive about an axis (16) perpendicular to the axis (3) of the disc drive.

4. Device according to any of the previous claims, characterised in that the first element is fixed in the axial direction.

5. Device according to any of the previous claims, characterised in that the disc drive is immobilised in rotation by friction with a fixed device (21, 23) when removed from its working position, the friction moment with the clutch device becoming greater than that with the fixed device when approaching the working position.

6. Device according to any of the previous claims, characterised in that the first element also comprises a movement transformation device (5) also of one piece with the shaft, the movement transformation device and the disc drive having surfaces of mutual co-operation to transform the rotational movement of the movement transformation device into an axial translation movement of the disc drive.

7. Device according to claim 6, characterised in that the surfaces of mutual co-operation belong to a female thread of the movement transformation device and a male thread of the disc drive.

8. Device according to any of the previous claims, characterised in that the first element also comprises a stop device (26), freely rotating in relation to the shaft, to co-operate with the second element (15).

9. Device for reading and/or writing data on discs, comprising at least one device according to any of the previous claims, and a read and/or write block (36) mounted on a fixed guide structure (35) so as to move approximately radially in relation to a face (31c) of a disc when this is rotated by the said device.

10. Device according to claim 9 comprising at least two devices according to claims 1 to 8, the read and/or write block being mounted on the said structure so as to be able to move in relation to both one face of a disc rotated by one of the said devices and one face of a disc rotated by the other device.
